# EUROPÄISCHE PATENTSCHRIFT

(11) **EP 3 771 380 B1**
(45) Veröffentlichungstag und Bekanntmachung des Hinweises auf die Patenterteilung: **16.03.2022**
(21) Anmeldenummer: 20183657.4
(22) Anmeldetag: 02.07.2020
(51) Int. Cl.: A47J 43/07

(54) **SICHERUNGSVERSCHLUSS FÜR EIN GEFÄSS EINER KÜCHENMASCHINE, GEFÄSS MIT SICHERUNGSVERSCHLUSS UND KÜCHENMASCHINE**
SAFETY CLOSURE FOR A BOWL OF A KITCHEN MACHINE, BOWL WITH SAFETY CLOSURE AND KITCHEN MACHINE
FERMETURE DE SÉCURITÉ POUR LA CUVE D'UNE MACHINE DE CUISINE, CUVE AVEC FERMETURE DE SÉCURITÉ ET MACHINE DE CUISINE

(30) Priorität: 30.07.2019 DE 102019211302
(43) Veröffentlichungstag der Anmeldung: 03.02.2021
(73) Patentinhaber: BSH Hausgeräte GmbH, 81739 München (DE)
(72) Erfinder: Habe, Mitja, 3320 Velenje (SI); Rudez, Darko, 3230 Sentjur (SI); Enci, David, 3331 Nazarje (SI)

(56) Entgegenhaltungen:
- EP-A1- 1 637 057
- US-A- 4 373 677

## Beschreibung

Die vorliegende Erfindung betrifft einen Sicherungsverschluss für ein Gefäß einer Küchenmaschine. Darüber hinaus betrifft die Erfindung ein Gefäß für eine Küchenmaschine, das einen solchen Sicherungsverschluss hat, sowie eine Küchenmaschine mit einem derartigen Gefäß.

Moderne Küchenmaschinen stellen eine kompakte und vielseitige Möglichkeit zum Bearbeiten von Lebensmitteln dar. Derartige Küchenmaschinen umfassen in der Regel ein Gefäß, in das jeweilige Lebensmittel eingefüllt werden können, sowie eine Basisstation. Ein Gehäuse der Basisstation definiert dabei üblicherweise eine vorgesehene Verwendungsposition für das Gefäß. In ihr kann insbesondere ein im Gefäß angeordnetes oder anzuordnendes Rotationswerkzeug an einen Elektromotor in der Basisstation anzukoppeln sein. Damit kann das jeweilige Lebensmittel beispielsweise verrührt oder zerkleinert werden; der Begriff "Lebensmittel" kann in dieser Schrift im Singular jeweils sowohl einen einzelnen Nahrungsgrundstoff, als auch eine Kombination, Mischung und/oder Verarbeitung von verschiedenen Grundstoffen bezeichnen.

Damit beim Einsatz eines solchen Rotationswerkzeugs keine Lebensmittelteile aus dem Gefäß geschleudert werden und zur Vermeidung eines Verletzungsrisikos für den Verwender ist es wichtig, dass das Gefäß während der Rotation sicher verschlossen ist. Dazu weisen Küchenmaschinen häufig einen Sicherungsmechanismus auf, der eine Rotation des Werkzeugs bei nicht korrekt verschlossenem Deckel des Gefäßes unterbindet.

Dokument EP-A-1637057 offenbart einen Sicherungsverschluss nach dem Oberbegriff des unabhängigen Anspruchs 1.

Der vorliegenden Erfindung liegt die Aufgabe zugrunde, eine verbesserte Technik zum Sichern eines Verschlusses für ein Gefäß einer Küchenmaschine bereitzustellen.

Die Aufgabe wird gelöst durch einen Sicherungsverschluss gemäß Anspruch 1, ein Gefäß gemäß Anspruch 8 und eine Küchenmaschine nach Anspruch 9. Vorteilhafte Ausführungsformen sind in den Unteransprüchen, der Beschreibung und den Figuren offenbart.

Ein erfindungsgemäßer Sicherungsverschluss dient dem Verschließen eines Gefäßes einer Küchenmaschine, insbesondere einer elektrischen Küchenmaschine mit einem Rotationswerkzeug. Der Sicherungsverschluss umfasst eine Verbindungseinheit, einen Verschlussring und eine Abdeckung.

Die Abdeckung ist vorzugsweise ein separates Element, das dazu eingerichtet ist, mit der Verbindungseinheit verbunden (beispielsweise auf die Verbindungseinheit aufgesetzt oder in eine Öffnung der Verbindungseinheit zumindest teilweise eingesetzt) zu werden und dann das Gefäß mindestens teilweise abzudecken; dazu weist die Abdeckung vorzugsweise eine einem Gefäßboden entgegengesetzt anzuordnende Abdeckfläche auf. Insbesondere kann die Abdeckung als ein Deckelkranz mit einer Öffnung zur Aufnahme eines Verschlussbechers und/oder zum Hindurchgeben von Zutaten, als ein Deckel mit einem Einfüllstutzen oder als tellerförmiger (geschlossener) Deckel ausgebildet sein.

Durch Drehung der Abdeckung in ihrem mit der Verbindungseinheit verbundenen (z.B. auf- bzw. eingesetzten) Zustand und relativ zur Verbindungseinheit kann die Abdeckung in mindestens eine Abdeckungs-Schließstellung gebracht werden. In dieser Stellung kann die Abdeckung vorzugsweise kraft- und/oder formschlüssig an der Verbindungseinheit befestigt sein.

Die Verbindungseinheit ist mit dem Gefäß verbunden oder kann mit ihm verbunden werden; insbesondere kann sie fest am Gefäß installiert oder lösbar an diesem zu befestigen sein. Sie kann beispielsweise einen sperrbaren Klappmechanismus (z.B. mindestens ein Scharnier) umfassen, mittels dessen der Sicherungsverschluss in einem ungesperrten Zustand des Klappmechanismus' wahlweise auf- oder zuklappbar sein kann. Das Aufklappen kann dabei ein Abklappen eines Teils des Sicherungsverschlusses (beispielsweise der Abdeckung, wenn diese aufgesetzt bzw. in ihrer Abdeckungs-Schließstellung ist, des Verschlussrings und/oder mindestens eines Teils der Verbindungseinheit) von einem anderen Teil des Sicherungsverschlusses und/oder vom Gefäß (bzw. einem Rand des Gefäßes) umfassen.

Der Verschlussring kann dauerhaft oder lösbar an der Verbindungseinheit befestigt bzw. zu befestigen sein. Derart befestigt ist er relativ zur Verbindungseinheit mindestens in einem vorgegebenen Winkelbereich (z.B. um mindestens 10°, mindestens 20° mindestens 45° oder mindestens 90°) drehbar, vorzugsweise unabhängig von der Abdeckung (in deren mit der Verbindungseinheit verbundenem (z.B. auf- bzw. eingesetztem) Zustand) und/oder um dieselbe Achse, um die die Abdeckung (im mit der Verbindungseinheit verbundenen Zustand) drehbar ist.

Mindestens eine Drehstellung des Verschlussrings relativ zur Verbindungseinheit definiert eine Verschlussring-Schließstellung. Bei den entsprechenden Ausführungsformen mit Klappmechanismus (s.o.) und in zugeklapptem Zustand des Sicherungsverschlusses kann der Verschlussring insbesondere dazu eingerichtet sein, in seiner Verschlussring-Schließstellung den Klappmechanismus zu sperren, insbesondere ein Aufklappen eines Teils des Sicherungsverschlusses zu unterbinden.

An der Verbindungseinheit, dem Verschlussring und der Abdeckung sind jeweilige Elemente angeordnet, die jeweils mindestens effektive Stellung einnehmen können und hier als Wirkelement, Betätigungselement bzw. Funktionselement bezeichnet werden. Wie weiter unten präzisiert ist, bedingen bzw. erfordern die jeweiligen effektiven Stellungen dieser Elemente einander teils gegenseitig und hängen zudem von einer jeweiligen Drehstellung des Verschlussrings bzw. der Abdeckung relativ zur Verbindungseinheit ab. Eine hier als "Schließsignalstellung" bezeichnete Stellung eines zusätzlich an der Verbindungseinheit angeordneten Schaltelements wird genau dann erreicht, wenn Wirkelement, Betätigungselement und Funktionselement alle drei in ihrer jeweiligen effektiven Stellung sind. Damit signalisiert die Schließsignalstellung, dass die Voraussetzungen für das Erreichen aller dieser effektiven Stellungen erfüllt sind, nämlich dass die Abdeckung und der Verschlussring in ihrer jeweiligen Schließstellung sind, der Sicherungsverschluss (bzw. das Gefäß) also sicher verschlossen ist.

In einer vorgesehenen Verwendungsposition eines einen derartigen Sicherungsverschluss aufweisenden Gefäßes in der Basisstation einer Küchenmaschine wirkt dann die Stellung des Schaltelements vorzugsweise auf eine Rotoraktivierungseinheit der Basisstation ein. Insbesondere wird dann eine Rotoraktivität vorzugsweise nur zugelassen, dass das Schaltelement in seiner Schließsignalstellung ist.

Das Schaltelement kann beispielsweise als ein Schieber ausgebildet sein, der je nach Stellung unterschiedlich weit aus der Verbindungseinheit hervortreten kann. Die Schließsignalstellung kann dann also durch ein vorgegebenes Maß des Hervortretens bestimmt sein.

Der erfindungsgemäße Sicherungsverschluss gewährleistet so (im Gebrauch), dass der Rotor nur arbeitet, wenn die Abdeckung und der Verschlussring in ihrer jeweiligen Schließstellung sind. Dabei ist die Sicherung rein mechanisch zu realisieren und damit zuverlässig sowie hitze- und feuchtigkeitsbeständig. Darüber hinaus ist der erfindungsgemäße Sicherungsverschluss einfach zu bedienen, insbesondere erfordert er keine bestimmte Reihenfolge für das Einstellen der jeweiligen Schließstellung von Abdeckung und Verschlussring. Mittels nur eines Schaltelements kann erfindungsgemäß signalisiert und damit kontrolliert werden, dass bzw. ob sowohl die Abdeckung als auch der Verschlussring in ihrer für einen sichern Betrieb der Rotationseinheit erforderlichen Schließstellung sind.

Ein erfindungsgemäßes Gefäß für eine Küchenmaschine weist einen erfindungsgemäßen Sicherungsverschluss gemäß einer der in dieser Schrift offenbarten Ausführungsformen auf. Vorzugsweise umfasst das Gefäß eine Kupplung zur Verbindung mit einem Rotor einer Basisstation der Küchenmaschine und/oder eine Heizeinrichtung.

Eine erfindungsgemäße Küchenmaschine umfasst entsprechend eine Basisstation mit Rotor und ein Gefäß mit einem erfindungsgemäßen Sicherungsverschluss gemäß einer der in dieser Schrift offenbarten Ausführungsformen. Das Gefäß ist herausnehmbar in einer vorgesehenen Verwendungsposition zu positionieren, in der eine jeweilige Stellung des Schaltelements Einfluss auf eine zur Basisstation gehörige Rotoraktivierungseinheit für den Rotor nehmen kann; die Verwendungsposition kann beispielsweise durch eine Aufnahmemulde in der Basisstation bestimmt sein, in die das Gefäß mindestens teilweise einzusetzen ist.

Vorzugsweise ist die Rotoraktivierungseinheit dazu eingerichtet, eine Aktivität des Rotors genau dann zuzulassen (also zu ermöglichen bzw. nicht zu verhindern), wenn das Schaltelement in der Schließsignalstellung ist. Dazu kann die Rotoraktivierungseinheit beispielsweise einen Schalter umfassen, der durch das Schaltelement in seiner Schließsignalstellung bedient wird und der so einen elektrischen Kontakt in einem Stromkreis der Rotoraktivierungseinheit herstellt; für die Aktivität des Rotors kann ein Schließen mindestens eines weiteren elektrischen Kontakts (beispielsweise durch vom Verwender zu bedienenden Schalter) erforderlich sein. Alternativ oder zusätzlich kann die Basisstation beispielsweise eine Sensoreinrichtung umfassen, die dazu eingerichtet sein kann, ein Vorliegen der Schließsignalstellung des Schaltelements zu erfassen und dann mindestens ein entsprechendes Signal an eine Steuerungseinrichtung der Rotoraktivierungseinheit zu übermitteln.

Die Küchenmaschine kann zudem eine Heizeinrichtung zum Erhitzen von Lebensmitteln im Gefäß, eine elektronische Steuereinrichtung, eine Waage und/oder eine elektronische Anzeigevorrichtung umfassen. Insbesondere kann sie als Multifunktionsküchenmaschine ausgebildet sein.

Die effektive Stellung des Funktionselements wird bei einem erfindungsgemäßen Sicherungsverschluss erreicht, wenn die Abdeckung in ihrer (mindestens einen) Abdeckungs-Schließstellung ist, und sie bewirkt, dass dann auch das Wirkelement in seiner effektiven Stellung ist. Durch Eindrehen der Abdeckung in seine Abdeckungs-Schließstellung kann damit also das Wirkelement (an der Verbindungseinheit) in seine effektive Stellung gebracht werden; entsprechend kann das Wirkelement durch Ausdrehen der Abdeckung aus seiner Abdeckungs-Schließstellung aus seiner effektiven Stellung wieder gelöst werden (und damit in eine ineffektive Stellung gebracht werden).

Das Funktionselement kann dazu beispielsweise mindestens einen Mitnehmer umfassen, der dazu eingerichtet ist, bei geeigneter Drehstellung der Abdeckung relativ zur Verbindungseinheit auf eine geeignete Struktur (z.B. eine Ausnehmung) des Wirkelements einzuwirken, insbesondere in der Abdeckungs-Schließstellung der Abdeckung die effektive Stellung des Wirkelements herbeizuführen. Beispielsweise kann das Funktionselement mindestens einen an der Abdeckung ausgebildeten (z.B. radialen und/oder axialen) Vorsprung umfassen (oder sogar als solch ein Vorsprung ausgebildet sein), der dazu eingerichtet sein kann, in eine vorzugsweise am Wirkelement ausgebildete Ausnehmung einzugreifen, wenn die Abdeckung in ihrer Abdeckungs-Schließstellung ist; die Angaben "radial" und "axial" beziehen sich dabei auf eine zugehörige Drehachse, um die die Abdeckung in ihrem mit der Verbindungseinheit verbundenen Zustand relativ zu dieser drehbar ist.

Das Wirkelement ist vorzugsweise beweglich, beispielsweise dreh- oder verschwenkbar und/oder verschieblich an der Verbindungseinheit befestigt. Es ist dazu eingerichtet, in seiner effektiven Stellung genau dann die effektive Stellung des Betätigungselements zu bewirken, wenn der Verschlussring in seiner (mindestens einen) Verschlussring-Schließstellung ist. Die effektive Stellung des Betätigungselements setzt also sowohl die effektive Stellung des Wirkelements als auch die Verschlussring-Schließstellung des Verschlussrings voraus.

Das Wirkelement kann dazu einen Mitnehmer umfassen, der dazu eingerichtet ist, in eine Struktur (z.B. eine Führung, insbesondere in Form einer Ausnehmung) am Betätigungselement einzugreifen, wenn dieses (relativ zum Wirkelement) an einer geeigneten Position ist, was durch die Verschlussring-Schließstellung des Verschlussrings gewährleistet wird. In Ausführungsformen, in denen das Wirkelement dreh- oder verschwenkbar an der Verbindungseinheit befestigt ist (wobei die zugehörige Dreh- bzw. Schwenkachse vorzugsweise parallel zur der Drehachse verläuft, um die der (lösbar oder dauerhaft an der Verbindungseinheit befestigte) Verschlussring relativ zur Verbindungseinheit drehbar ist), kann ein solcher Mitnehmer einen Vorsprung in - bezogen auf die Dreh- bzw. Schwenkachse - radialer und/oder axialer Richtung umfassen.

Das Betätigungselement ist vorzugsweise am Verschlussring befestigt. Es kann insbesondere als ein verschwenkbarer Schwenkarm ausgebildet sein. Dessen Verschwenkung kann vorzugsweise durch das Wirkelement an der Verbindungseinheit bewirkt werden, wenn der Verschlussring in seiner Verschlussring-Schließstellung ist. Eine zugehörige Schwenkachse eines solchen Schwenkarms verläuft vorzugsweise parallel zu der Drehachse, um die der Verschlussring (in einem lösbar oder dauerhaft an der Verbindungseinheit befestigten Zustand) relativ zur Verbindungseinheit drehbar ist.

In seiner effektiven Stellung betätigt das Betätigungselement das Schaltelement an der Verbindungseinheit und bewirkt so dessen Schließsignalstellung. Das Betätigungselement kann dazu beispielsweise gegen das Schaltelement drücken und/oder einen Mitnehmer umfassen, der dazu eingerichtet ist, auf eine passende Struktur einzuwirken, die am Schaltelement ausgebildet sein kann.

Außerhalb ihrer jeweiligen effektiven Stellungen sind das Funktionselement, das Wirkelement und/oder das Betätigungselement vorzugsweise ineffektiv in dem Sinne, das sie/es bei keinem der jeweils anderen dieser Elemente dessen effektive Stellung bewirken/bewirkt; im Falle des Betätigungselements umfasst die ineffektive Stellung vorzugsweise, dass das Betätigungselement in ihr keine Schließsignalstellung des Schaltelements bedingt.

Gemäß vorteilhaften Ausführungsformen umfasst das Schaltelement mindestens ein Federelement, dessen Federkraft der Schließsignalstellung des Schaltelements entgegenwirkt. Alternativ kann das Betätigungselement dazu eingerichtet sein, beim Verlassen seiner effektiven Stellung (also beim Übergang von der effektiven in eine ineffektive Stellung) das Schaltelement aus dessen Schließsignalstellung zu bewegen, beispielsweise mittels einer jeweiligen Mitnahmestruktur an Betätigungselement und Schaltelement. So kann jeweils gewährleistet werden, dass das Schaltelement nur dann seine Schließsignalstellung einnimmt, wenn das Betätigungselement entsprechend auf das Schaltelement einwirkt.

Analog kann das Betätigungselement mindestens ein Federelement aufweisen, dessen Federkraft seiner effektiven Stellung entgegenwirkt, und/oder das Wirkelement kann dazu eingerichtet sein, das Betätigungselement (beispielsweise mittels einer passenden geometrischen Form von Wirkelement und/oder Betätigungselement) aus dessen effektiver Stellung zu drängen, wenn der Verschlussring seine Verschlussring-Schließstellung (relativ zur Verbindungseinheit und damit zum Wirkelement) verlässt.

Alternativ oder zusätzlich kann das Wirkelement mindestens ein Federelement aufweisen, dessen Federkraft seiner effektiven Stellung entgegenwirkt, und/oder das Funktionselement kann dazu eingerichtet sein, beim Übergang der Abdeckung aus ihrer Abdeckungs-Schließstellung das Wirkelement mechanisch aus dessen effektiver Stellung zu bewegen, beispielsweise mittels eines vom Funktionselement umfassten Mitnehmers, der - wie oben erwähnt - zudem umgekehrt auch dazu eingerichtet sein kann, in der Abdeckungs-Schließstellung der Abdeckung die effektive Stellung des Wirkelements herbeizuführen.

Schließlich kann das Funktionselement (alternativ oder zusätzlich) ein Federelement umfassen, das seiner effektiven Stellung entgegenwirkt, und/oder das Funktionselement kann von der Abdeckung aus seiner effektiven Stellung bewegt werden, wenn die Abdeckung ihre Abdeckungs-Schließstellung verlässt.

Ein erfindungsgemäßes Gefäß kann eine Mehrzahl von mindestens zwei verschiedenen Abdeckungen für den Sicherungsverschluss umfassen, die jeweils (alternativ zueinander) mit dem Verschlussring und der Verbindungseinheit kombinierbar sind. Die Mehrzahl kann dabei insbesondere eine als Deckelkranz mit einer Öffnung zur Aufnahme eines Verschlussbechers und/oder zum Hindurchgeben von Zutaten ausgebildete Abdeckung, eine als Deckel mit einem Einfüllstutzen ausgebildete Abdeckung und/oder eine als tellerförmiger (geschlossener) Deckel ausgebildete Abdeckung umfassen.

Im Folgenden wird ein bevorzugtes Ausführungsbeispiel der Erfindung anhand von Zeichnungen näher erläutert. Es versteht sich, dass die einzelnen Komponenten auch anders kombiniert und/oder geformt sein können als dargestellt. Bezugszeichen für einander entsprechende Elemente sind figurenübergreifend verwendet und werden ggf. nicht für jede Figur neu beschrieben.

Es versteht sich, dass reale Größenverhältnisse von den dargestellten abweichen können.

Es zeigen schematisch:
- Figur 1:: einen exemplarischen erfindungsgemäßen Sicherungsverschlusses in einem ersten, verschlossenen Zustand;
- Figur 2:: einen Einblick in den verschlossenen Sicherungsverschluss der Figur 1 in demselben Zustand;
- Figur 3:: einen Einblick in den verschlossenen Sicherungsverschluss der Figur 1 in einem zweiten Zustand;
- Figur 4:: einen Einblick in den verschlossenen Sicherungsverschluss der Figur 1 in einem dritten Zustand;
- Figur 5:: einen Einblick in den verschlossenen Sicherungsverschluss der Figur 1 in einem vierten Zustand; und
- Figur 6:: zwei verschiedene mögliche Abdeckungen eines erfindungsgemäßen Sicherungsverschlusses.

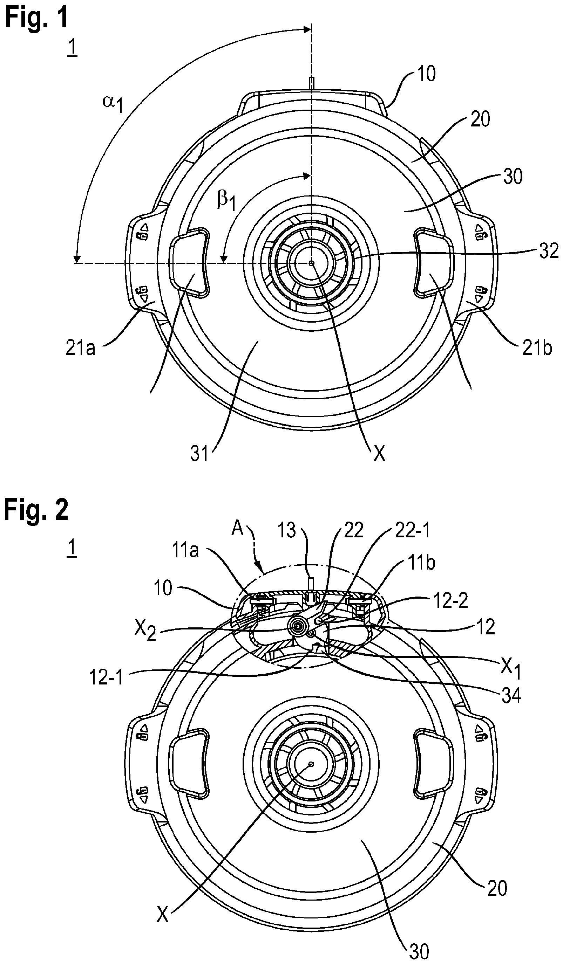

In der Figur 1 ist ein Ausführungsbeispiel eines erfindungsgemäßen Sicherheitsverschlusses 1 für ein Gefäß einer erfindungsgemäßen Küchenmaschine in einem geschlossenen, ersten Zustand dargestellt. Der Sicherungsverschluss 1 umfasst eine Verbindungseinheit 10, einen Verschlussring 20 und eine Abdeckung 30.

Mittels der Verbindungseinheit 10 kann der Sicherungsverschluss 1 mit dem Gefäß verbunden werden oder bereits verbunden sein; bezogen auf eine vorgesehene Verwendungsausrichtung zeigt die Figur 1 dann das mittels des Sicherungsverschlusses verschlossene Gefäß in einer Draufsicht (also von oben), so dass das Gefäß selbst nicht sichtbar ist. Die Abdeckfläche 31 der Abdeckung 30 ist dabei vorzugsweise einem (nicht sichtbaren) Boden des Gefäßes entgegengesetzt angeordnet.

Der Verschlussring 20 ist in dem in der Figur 1 dargestellten Zustand (wie auch in den in den Figuren 2 bis 5 gezeigten Zuständen) dauerhaft oder lösbar an der Verbindungseinheit 10 befestigt und relativ zu dieser um eine Achse X, die in den Figur 1 bis 5 senkrecht zur Darstellungsebene verläuft, zumindest in einem vorgegebenen Winkelbereich drehbar. Zum erleichterten Bedienen (insbesondere Drehen) weist der Verschlussring 20 in der dargestellten Ausführungsform Griffelemente 21a, 21b auf.

Die Figur 1 zeigt dabei den Sicherungsverschluss in einem Zustand, in dem der Verschlussring in einer durch seine Drehstellung relativ zur Verbindungseinheit 10 bestimmten Verschlussring-Schließstellung ist. In der Figur 1 ist dies durch den Winkel α₁ gekennzeichnet.

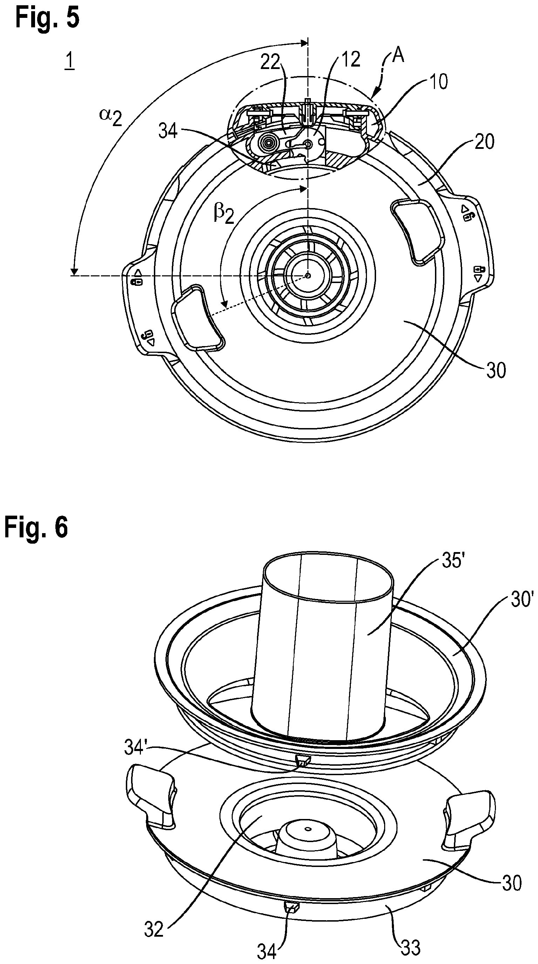

Die Abdeckung 30 ist vorliegend ein separates Element in Form eines Deckelkranzes mit einer Abdeckfläche 31 und einer darin ausgebildeten Öffnung 32 zur Aufnahme eines (nicht dargestellten) Verschlussbechers und/oder zum Hindurchgeben von Zutaten in das geschlossene Gefäß; in der Figur 6 ist die Abdeckung 30 noch in einer anderen Perspektive gezeigt.

Im in den Figur 1 dargestellten Zustand (wie auch in den Zuständen, die in den Figuren 2 bis 5 gezeigten sind) ist die Abdeckung 30 teilweise in eine Öffnung der Verbindungseinheit 10 eingesetzt, so dass vorliegend ein von der Abdeckfläche 31 abstehender (in der Figur 6 sichtbarer) Kragen 33 der Abdeckung in die genannte Öffnung eingreift. In diesem Zustand ist die Abdeckung 30 beim gezeigten Ausführungsbeispiel vom Verschlussring 20 umgeben und relativ zur Verbindungseinheit 10 (vorzugsweise unabhängig vom Verschlussring 20) ebenfalls um die Achse X drehbar.

Die Figur 1 zeigt die Abdeckung 30 in ihrer Abdeckungs-Schließstellung, die durch eine Drehstellung der Abdeckung 30 relativ zur Verbindungseinheit 10 bestimmt ist. In der Figur 1 ist dies durch den Winkel β₁ gekennzeichnet.

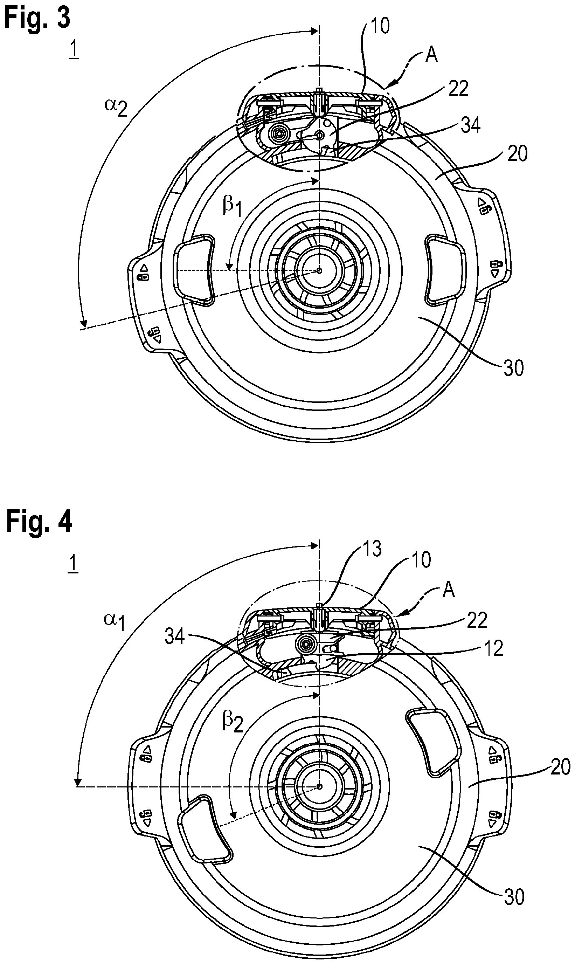

Die Figuren 2 bis 5 zeigen denselben Sicherungsverschluss 1 aus derselben Perspektive, wobei in den Figuren 3 bis 5 jeweils ein anderer Zustand als in den Figuren 1 und 2 dargestellt ist. Zur Verdeutlichung der Erfindung gewähren die Figuren 2 bis 5 (anders als die Figur 1) in einem Abschnitt A jeweils einen Einblick in den (in der Realität gemäß der Figur 1 verdeckten) Mechanismus des Sicherheitsverschlusses 1.

So ist in den Figuren 2 - 5 jeweils im Abschnitt A insbesondere zu sehen, dass die Verbindungseinheit 10 einen Klappmechanismus mit zwei Scharnieren 11a, 11b umfasst; im Sinne der Übersichtlichkeit sind diese nur in der Figur 2 bezeichnet. In seiner Verschlussring-Schließstellung (dargestellt in den Figuren 1, 2 und 4) sperrt der Verschlussring 20 vorzugsweise den Klappmechanismus (nicht sichtbar). Wenn der Verschlussring 20 hingegen außerhalb seiner Verschlussring-Schließstellung ist (gezeigt in den Figuren 3 und 5), kann der Sicherungsverschluss 1 vorzugsweise wahlweise auf- oder zugeklappt werden (nicht sichtbar). Insbesondere kann dabei vorliegend ein den Verschlussring 20, die eingesetzte Abdeckung 30 und einen Abschnitt der Verbindungseinheit 10 umfassender Teil des Sicherungsverschlusses 1 wahlweise von einem Rand des Gefäßes abgeklappt oder auf den Rand des Gefäßes aufgeklappt werden.

Darüber hinaus sind in den Figuren 2 bis 5 aufgrund des Einblicks im Abschnitt A jeweils ein Funktionselement 34 an der Abdeckung 30, ein Wirkelement 12 und ein Schaltelement 13 an der Verbindungseinheit 10 und ein Betätigungselement 22 am Verschlussring 20 zu erkennen.

Das Funktionselement 34 ist vorliegend als ein Mitnehmer in Form eines an der Abdeckung 30 (nämlich im dargestellten Ausführungsbeispiel an deren Kragen 33, siehe Figur 6) radial hervortretenden Vorsprungs ausgebildet. Mit einer Drehung der Abdeckung 30 um die Achse X kann das Funktionselement 34 in Umlaufrichtung bewegt und so wahlweise in eine effektive Stellung ein- oder aus dieser herausgedreht werden.

Das Wirkelement 12 ist im gezeigten Ausführungsbeispiel drehbar um eine zur Achse X parallele Achse X₁ an der Verbindungseinheit 10 befestigt. Es weist (jeweils bezogen auf die Achse X₁) eine radiale Ausnehmung 12-1 in seiner Peripherie und einen Mitnehmer 12 -2 in Form einer axialen Erhebung auf.

Das Betätigungselement 22 ist vorliegend als Schwenkarm ausgebildet, der verschwenkbar um eine zur Achse X parallele Achse X₂ am Verschlussring 20 befestigt ist und an seinem freien Ende eine Führung 21-1 in Form einer sich zur Achse X₂ hin verengenden Ausnehmung aufweist.

Das Schaltelement 13 ist bei der gezeigten Ausführungsform als ein Schiebeelement ausgebildet, das je nach Stellung unterschiedlich weit aus der Verbindungseinheit 10 hervortreten kann. In seiner in den Figuren 1 und 2 gezeigten Schließsignalstellung tritt es dabei vorliegend weiter hervor als außerhalb der Schließsignalstellung, vgl. die Figuren 3 bis 5. Vorzugsweise umfasst das Schaltelement 13 ein Federelement, dessen Federkraft dem Einnehmen der Schließsignalstellung entgegenwirkt.

In Gebrauch des Gefäßes mit dem Sicherungsverschluss 1 in einer erfindungsgemäßen Küchenmaschine beeinfluss die jeweilige Stellung des Schaltelements 13 eine Rotoraktivierungseinheit einer zugehörigen Basisstation. Insbesondere verhindert die Schließsignalstellung des Schaltelements 13 vorzugsweise eine Rotoraktivität, beispielsweise indem sie eine Unterbrechung eines Schaltkreises für den Rotor bewirkt.

In dem in den Figuren 1 und 2 dargestellten Zustand befindet sich das Funktionselement 34 (infolge der Abdeckungs-Schließstellung der Abdeckung 30) in seiner effektiven Stellung, die dadurch bestimmt ist, dass das Funktionselement 34 in ihr die effektive Stellung des Wirkelements 12 bedingt. Dazu greift das Funktionselement 34 in die Ausnehmung 12-1 im Wirkelement ein. Bei einem (dem in den Figuren 1 und 2 gezeigten Zustand vorangehenden) Eindrehen der Abdeckung 30 in ihre Abdeckungs-Schließstellung wird so vom Funktionselement 34 eine Drehung des Wirkelements 12 um die Achse X₁ bewirkt. Mit Erreichen der Abdeckungs-Schließstellung wird das Wirkelement 12 dann - wie in der Figur 2 zu sehen ist - vom Funktionselement 34 in dieser Stellung gehalten.

Die effektive Stellung des Wirkelements 12 wiederum ist vorliegend durch dessen Drehstellung und damit durch eine Position des Mitnehmers 12-2 bestimmt: In dieser Position kann der Mitnehmer 12-2 in die Führung 22-1 des Betätigungselements 22 eingreifen und so seinerseits die effektive Stellung des Betätigungselements 22 bedingen, dieses nämlich bei einem (dem in den Figuren 1 und 2 gezeigten Zustand vorangehenden) Eindrehen des Verschlussrings 20 in seine Verschlussring-Schließstellung gegen das Schaltelement 13 drängen und dann (in dem in den Figuren 1 und 2 gezeigten Zustand) in dieser Position halten. Durch den Druck auf das Schaltelement 13 bedingt das Betätigungselement 22 in seiner so verwirklichten effektiven Stellung die Schließsignalstellung des Schaltelements 13.

In den Zuständen, die in den Figuren 3 bis 5 dargestellt sind, ist dies hingegen nicht möglich:
So zeigt die Figur 3 einen Zustand, in dem zwar die Abdeckung 30 in ihrer Abdeckungs-Schließstellung, der Verschlussring 20 jedoch - wie durch den Winkel α₂ illustriert - nicht in seiner Verschlussring-Schließstellung. Mit der Abdeckungs-Schließstellung der Abdeckung 30 sind sowohl das Funktionselement 34 als auch das Wirkelement 22 jeweils in ihrer effektiven Stellung. Aufgrund der Stellung des Verschlussrings 20 kann jedoch das Wirkelement 22 in dieser Situation nicht die effektive Stellung des Betätigungselements 22 bedingen, die ihrerseits Voraussetzung für die Schließsignalstellung des Schaltelement 13 wäre.

Im in der Figur 4 dargestellten Zustand hingegen ist zwar der Verschlussring 20 in seiner Verschlussring-Schließstellung, die Abdeckung 30 befindet sich jedoch - wie durch den Winkel β₂ kenntlich gemacht - außerhalb seiner Abdeckungs-Schließstellung. Daher ist das Funktionselement 34 nicht in seiner effektiven Stellung, was Voraussetzung für die effektive Stellung des Wirkelements 12, damit für die effektive Stellung des Betätigungselements 22 und darüber für die Schließsignalstellung des Schaltelement 13 wäre.

Die Figur 5 schließlich zeigt einen Zustand, in dem weder der Verschlussring 20 in seiner Verschlussring-Schließstellung noch die Abdeckung 30 in ihrer Abdeckungs-Schließstellung ist. Damit ist keines der drei Elemente (Funktionselement 34, Wirkelement 12 und Betätigungselement 22) in seiner jeweiligen effektiven Stellung und das Schaltelement 13 auch nicht in der Schließsignalstellung.

In Figur 6 ist in perspektivischer Ansicht außer der Abdeckung 30 eine alternative Abdeckung 30' für einen erfindungsgemäßen Sicherungsverschluss dargestellt. Die Abdeckung 30', an der ein Funktionselement 34' angeordnet ist, ist in diesem Fall als Deckel mit einem Einfüllstutzen 35' ausgebildet. Ein erfindungsgemäßes Gefäß bzw. eine erfindungsgemäße Küchenmaschine können jeweils insbesondere beide Abdeckungen 30, 30' zur alternativen Kombination mit der Verbindungseinheit 10 und dem Verschlussring 20 und damit zum Gebrauch nach Wahl eines Verwenders umfassen.

Offenbart ist ein Sicherungsverschluss 1 für ein Gefäß einer Küchenmaschine, der eine Verbindungseinheit 10, einen Verschlussring 20 und eine Abdeckung 30, 30' umfasst. An der Verbindungseinheit 10 sind ein Wirkelement 12 und ein Schaltelement 13 angeordnet, am Verschlussring 20 ein Betätigungselement 22 und an der Abdeckung 30, 30' ein Funktionselement 34, 34. Sind der Verschlussring in einer Verschlussring-Schließposition und die Abdeckung in einer Abdeckungs-Schließposition, so sind sowohl das Funktionselement 34, 34' als auch das Wirkelement 12 und das Betätigungselement in ihrer jeweiligen effektiven Stellung und bilden so eine Wirkungskette aus, die eine Schließsignalstellung des Schaltelements 13 bedingt.

Offenbart sind ferner ein Gefäß mit einem solchen Sicherungsverschluss 1 sowie eine Küchenmaschine mit einem derartigen Gefäß.

### Bezugszeichen

- 1: Sicherungsverschluss

- 10: Verbindungseinheit
- 11a, 11b: Scharniere der Verbindungseinheit
- 12: Wirkelement
- 12-1: Ausnehmung im Wirkelement
- 12-2: Mitnehmer des Wirkelements
- 13: Schaltelement

- 20: Verschlussring
- 21a, 21b: Griffelemente des Verschlussrings
- 22: Betätigungselement
- 22-1: Führung am Betätigungselements

- 30, 30': Abdeckung
- 31: Abdeckfläche
- 32: Öffnung zur Aufnahme eines Verschlussbechers und/oder zum Hindurchgeben von Zutaten
- 33: von der Abdeckfläche abstehender Kragen
- 34, 34': Funktionselement

## Patentansprüche

1. Sicherungsverschluss (1) für ein Gefäß einer Küchenmaschine, der eine mit dem Gefäß verbundene oder zu verbindende Verbindungseinheit (10), einen durch Drehung relativ zur Verbindungseinheit (10) in mindestens eine Verschlussring-Schließstellung zu bringenden Verschlussring (20) und eine durch Drehung relativ zur Verbindungseinheit (10) in eine Abdeckungs-Schließstellung zu bringende Abdeckung (30, 30') für das Gefäß umfasst, wobei
- an der Verbindungseinheit (10) ein Schaltelement (13)
- am Verschlussring (20) ein Betätigungselement (22) und
- an der Abdeckung (30, 30') ein Funktionselement (34, 34') angeordnet sind,
**dadurch gekennzeichnet, dass** an der Verbindungseinheit (10) ein Wirkelement (12) angeordnet ist, wobei
für das Funktionselement (34, 34'), das Wirkelement (12) und
das Betätigungselement (22) jeweils mindestens eine effektive Stellung einstellbar ist,
wobei das Funktionselement (34, 34') in der Abdeckungs-Schließstellung der Abdeckung (30, 30') in seiner effektiven Stellung ist, in der es die effektive Stellung des Wirkelements (12) bedingt,
wobei das Wirkelement (12) in seiner effektiven Stellung die effektive Stellung des Betätigungselements (22) bedingt, wenn der Verschlussring (20) in seiner Verschlussring-Schließstellung ist, und
wobei das Betätigungselement (22) in seiner effektiven Stellung eine Schließsignalstellung des Schaltelements (13) bedingt.

2. Sicherungsverschluss nach Anspruch 1, wobei das Betätigungselement (22) als verschwenkbar am Verschlussring (20) befestigter Schwenkarm ausgebildet ist.

3. Sicherungsverschlussgemäß einem der Ansprüche 1 oder 2, wobei das Wirkelement (12) drehbar an der Verbindungseinheit (10) befestigt ist.

4. Sicherungsverschluss gemäß einem der vorhergehenden Ansprüche, wobei das Funktionselement (34, 34') einen an der Abdeckung (30, 30') ausgebildeten Vorsprung umfasst, der dazu eingerichtet ist, durch Drehung der Abdeckung relativ zur Verbindungseinheit (10) mit einer Ausnehmung (12-2) am Wirkelement (12) in Eingriff gebracht zu werden.

5. Sicherungsverschluss gemäß einem der vorhergehenden Ansprüche, wobei das Wirkelement (12) einen Mitnehmer (12-1) zum Eingriff in eine Struktur (22-1) am Betätigungselement (22) umfasst.

6. Sicherungsverschluss gemäß einem der vorhergehenden Ansprüche, wobei die Verbindungseinheit (10) einen sperrbaren Klappmechanismus (11a, 11b) umfasst, mittels dessen der Sicherungsverschluss in einem ungesperrten Zustand des Klappmechanismus' wahlweise auf- oder zuklappbar ist.

7. Sicherungsverschluss gemäß einem der vorhergehenden Ansprüche, wobei die Abdeckung als Deckelkranz (30) mit einer Öffnung (32) zur Aufnahme eines Verschlussbechers und/oder zum Hindurchgeben von Zutaten, als Deckel (30') mit Einfüllstutzen (35') oder als tellerförmiger Deckel ausgebildet ist.

8. Gefäß für eine Küchenmaschine, wobei das Gefäß einen Sicherungsverschluss (1) gemäß einem der vorhergehenden Ansprüche aufweist.

9. Küchenmaschine mit einer Basisstation und einem Gefäß gemäß Anspruch 8, wobei die Basisstation einen Rotor umfasst und wobei das Gefäß herausnehmbar in einer vorgesehenen Verwendungsposition der Basisstation zu positionieren ist, in der eine jeweilige Stellung des Schaltelements (13) eine Rotoraktivierungseinheit der Basisstation beeinflusst.

10. Küchenmaschine nach Anspruch 9, wobei die Rotoraktivierungseinheit dazu eingerichtet ist, eine Rotoraktivität nur zuzulassen, wenn das Schaltelement (13) in der Schließsignalstellung ist.

## Claims

1. Safety closure (1) for a vessel of a food processor, which comprises a connection unit (10) that is connected or to be connected to the vessel, a closure ring (20) that is to be brought into at least one closure ring closing position by rotating relative to the connection unit (10) and a cover (30, 30') for the vessel that is to be brought into at least one cover closing position by rotating relative to the connection unit (10), wherein
- a switch element (13) is arranged on the connection unit (10),
- an actuation element (22) is arranged on the closure ring (20) and
- a function element (34, 34') is arranged on the cover (30, 30'),
**characterised in that** an active element (12) is arranged on the connection unit (10),
wherein at least one effect position can be set for the function element (34, 34'), the active element (12) and the actuation element (22) in each case,
wherein the function element (34, 34'), when the cover (30, 30') is in the cover closing position, is in its effective position, in which it necessitates the effective position of the active element (12),
wherein the active element (12), when it is in its effective position, necessitates the effective position of the actuation element (22) when the closure ring (20) is in its closure ring closing position, and
wherein the actuation element (22), when it is in its effective position, necessitates a closing signal position of the switch element (13).

2. Safety closure according to claim 1, wherein the actuation element (22) is embodied as a pivot arm that is fastened to the closure ring (20) in a pivotable manner.

3. Safety closure according to one of claims 1 or 2, wherein the active element (12) is fastened to the connection unit (10) in a rotatable manner.

4. Safety closure according to one of the preceding claims, wherein the function element (34, 34') comprises a projection, which is embodied on the cover (30, 30') and is configured to be brought into engagement with a recess (12-2) on the active element (12) by rotating the cover relative to the connection unit (10).

5. Safety closure according to one of the preceding claims, wherein the active element (12) comprises a carrier (12-1) for engaging into a structure (22-1) on the actuation element (22).

6. Safety closure according to one of the preceding claims, wherein the connection unit (10) comprises a lockable flap mechanism (11a, 11b), by means of which the safety closure can be optionally folded out or in when the flap mechanism is in an unlocked state.

7. Safety closure according to one of the preceding claims, wherein the cover is embodied as a lid rim (30) with an opening (32) for accommodating a closure beaker and/or for passing through ingredients, as a lid (30') with filler neck (35') or as a plate-shaped lid.

8. Vessel for a food processor, wherein the vessel has a safety closure (1) according to one of the preceding claims.

9. Food processor with a base station and a vessel according to claim 8, wherein the base station comprises a rotor and wherein the vessel is to be positioned such that it can be removed in an intended use position of the base station, in which a respective position of the switch element (13) influences a rotor activation unit of the base station.

10. Food processor according to claim 9, wherein the rotor activation unit is configured to only permit rotor activity when the switch element (13) is in the closing signal position.

## Revendications

1. Fermeture de sécurité (1) pour une cuve d'une machine de cuisine, comprenant
une unité de liaison (10) reliée ou à relier avec la cuve,
une bague de verrouillage (20) à mettre dans au moins une position de fermeture de bague de verrouillage par rotation par rapport à l'unité de liaison (10) et
un couvercle (30, 30') pour la cuve à mettre dans une position de fermeture de couvercle par rotation par rapport à l'unité de liaison (10),
- un élément de commutation (13) étant disposé sur l'unité de liaison (10)
- un élément d'actionnement (22) étant disposé sur la bague de verrouillage (20) et
- un élément fonctionnel (34, 34') étant disposé sur le couvercle (30, 30'), **caractérisé en ce qu'**un élément actif (12) est disposé sur l'unité de liaison (10), au moins une position effective pouvant être réglée respectivement pour l'élément fonctionnel (34, 34'), l'élément actif (12) et l'élément d'actionnement (22), l'élément fonctionnel (34, 34') étant dans sa position effective dans la position de fermeture du couvercle (30, 30'), dans laquelle il conditionne la position effective de l'élément actif (12), l'élément actif (12) conditionnant, dans sa position effective, la position effective de l'élément d'actionnement (22) lorsque la bague de verrouillage (20) est dans sa position fermée de bague de verrouillage, et l'élément d'actionnement (22) conditionnant, dans sa position effective, une position de signal de fermeture de l'élément de commutation (13).

2. Fermeture de sécurité selon la revendication 1, dans laquelle l'élément d'actionnement (22) est conçu comme un bras pivotant fixé à la bague de verrouillage (20) de manière à pouvoir pivoter.

3. Fermeture de sécurité selon l'une des revendications 1 ou 2, dans laquelle l'élément actif (12) est fixé en rotation sur l'unité de liaison (10).

4. Fermeture de sécurité selon l'une des revendications précédentes, dans laquelle l'élément fonctionnel (34, 34') comprend une saillie formée sur le couvercle (30, 30') et qui est conçue pour être mise en prise avec un évidement (12-2) de l'élément actif (12) par rotation du couvercle par rapport à l'unité de liaison (10).

5. Fermeture de sécurité selon l'une des revendications précédentes, dans laquelle l'élément actif (12) comprend un entraîneur (12-1) pour la mise en prise dans une structure (22-1) de l'élément d'actionnement (22).

6. Fermeture de sécurité selon l'une des revendications précédentes, dans laquelle l'unité de liaison (10) comprend un mécanisme de rabattement verrouillable (11a, 11b), au moyen duquel la fermeture de sécurité peut être ouverte ou fermée sélectivement dans un état déverrouillé du mécanisme de rabattement.

7. Fermeture de sécurité selon l'une des revendications précédentes, dans laquelle le couvercle est conçu comme un couvercle en couronne (30) doté d'une ouverture (32) destinée à recevoir un gobelet de fermeture et/ou à faire passer des ingrédients, comme un couvercle (30') doté d'un goulot de remplissage (35') ou comme un couvercle en forme d'assiette.

8. Cuve pour machine de cuisine, la cuve comportant une fermeture de sécurité (1) selon l'une des revendications précédentes.

9. Machine de cuisine dotée d'une station de base et d'une cuve selon la revendication 8, dans laquelle la station de base comprend un rotor et dans laquelle la cuve doit être positionnée de manière amovible dans une position d'utilisation prévue de la station de base, dans laquelle une position respective de l'élément de commutation (13) influence une unité d'activation de rotor de la station de base.

10. Machine de cuisine selon la revendication 9, dans laquelle l'unité d'activation de rotor est conçue pour ne permettre l'activité du rotor que lorsque l'élément de commutation (13) est dans la position de signal de fermeture.
